Europäisches Patentamt

European Patent Office

Office européen des brevets

(19)

(11) Veröffentlichungsnummer : **0 380 510 B1**

## (12) EUROPÄISCHE PATENTSCHRIFT

(45) Veröffentlichungstag der Patentschrift :
**02.12.92 Patentblatt 92/49**

(51) Int. Cl.$^5$ : **B41M 5/26**

(21) Anmeldenummer : **88907613.9**

(22) Anmeldetag : **19.09.88**

(86) Internationale Anmeldenummer :
**PCT/DE88/00582**

(87) Internationale Veröffentlichungsnummer :
**WO 89/02832 06.04.89 Gazette 89/08**

(54) **LASERSTRAHL-INDUZIERTES FARBDRUCKEN.**

(30) Priorität : **22.09.87 DE 3731835**

(43) Veröffentlichungstag der Anmeldung :
**08.08.90 Patentblatt 90/32**

(45) Bekanntmachung des Hinweises auf die
Patenterteilung :
**02.12.92 Patentblatt 92/49**

(84) Benannte Vertragsstaaten :
**CH DE FR GB IT LI NL SE**

(56) Entgegenhaltungen :
**EP-A- 0 279 104**
**FR-A- 2 536 014**
**FR-A- 2 601 467**
**GB-A- 2 113 860**
**GB-A- 2 173 452**

(56) Entgegenhaltungen :
**US-A- 4 149 887**
**PATENT ABSTRACT OF JAPAN, vol. 11, nr. 175**
**(M-596) (2622), 05 June 1987; JP - A - 62 007 593**
**(SEIKO INSTR. & ELECTRONICSLTD) 14 Janu-**
**ary 1987.**

(73) Patentinhaber : **SIEMENS**
**AKTIENGESELLSCHAFT**
**Wittelsbacherplatz 2**
**W-8000 München 2 (DE)**

(72) Erfinder : **KLEINSCHMIDT, Peter**
**Klagenfurter Str. 12**
**W-8000 München 90 (DE)**
Erfinder : **MADER, Gerhard**
**Hauptstr. 47**
**W-8025 Unterhaching (DE)**
Erfinder : **MEIXNER, Hans**
**Max-Planck-Str. 5**
**W-8013 Haar (DE)**

**Beschreibung**

Aus der GB-A-2 173 452 sind eine Vorrichtung und ein Verfahren für Laserdruck bekannt. Verwendet wird dabei ein Druckträger, z.B. ein Blatt Papier, dessen Oberfläche mit sogenannten Mikrokapseln beschichtet ist. Es ist hier also ein Spezialpapier erforderlich, um das Farbdrucken durchzuführen.

Diese Mikrokapseln enthalten eine als Druckfarbe verwendete Tinte. Sobald eine solche Mikrokapsel von der Strahlung eines Lasers der Druckvorrichtung getroffen wird, wird diese Kapsel aufgebrochen, sofern die auftreffende Laserstrahlung eine gewisse vorgegebene Mindestenergie hat. Es kann vorgesehen sein, daß die in der Kapsel enthaltene Tinte für diese Laserstrahlung derart absorbierend ist, daß die Laserstrahl-Energie von dieser Tinte aufgenommen wird. Eine Alternative dazu ist, daß das Material der Wand der Kapsel derartige Laserstrahlungs-Absorption aufweist. Hilfsweise kann vargesehen sein, daß eine jeweilige Mikrokapsel zusätzlich einen Absorberstoff enthält.

Die absorbierte Laserstrahlungsenergie bewirkt, daß eine jeweilige Mikrokapsel aufplatzt und damit die in ihr enthaltene Farbtinte als Druckfarbe auf das Papier gelangt. Ein Verstärkungseffekt hinsichtlich der Wirksamkeit der Laserstrahlung kann vorgesehen sein, nämlich daß in einer jeweiligen Mikrokapsel (zusätzlich) und/oder im Material der Wandung der Mikrokapsel ein solcher Stoff enthalten ist, der bei Auftreffen der Laserstrahlung eine solche chemische Reaktion ablaufen läßt, die das Aufbrechen der Kapseln bewirkt oder zumindest unterstützt.

Ein derartiges Laser-Druckverfahren kann ohne Verwendung von Druckbuchstaben-Masken in der Weise durchgeführt werden, daß die einzelnen Buchstaben matrixartig durch den entsprechend gesteuerten, fokussierten Laserstrahl punktweise zusammengesetzt werden.

Für Mehrfarbendruck werden Mikrokapseln verwendet, die entsprechend verteilt angeordnet eine jeweilige der vorgesehenen Druckfarben enthält. Üblich ist es hierfür die Farbstoffe Cyan, Magenta und Yellow und ggf. zusätzlich auch Schwarz zu verwenden.

In der US-A-3 351 948 ist ein Mehrfarbendruck-Verfahren mit Mikrokapseln beschrieben, bei dem vorgesehen ist, daß die Mikrokapseln einer jeweiligen Farbe in einer Zeile angeordnet sind. Für Mehrfarbendruck müssen dann für einen Druckpunkt, abhängig davon, ob eine reine Farbe oder eine Mischfarbe gedruckt werden soll, eine oder mehrere dieser benachbarten Zeilen vom druckenden Laserstrahl getroffen werden.

Aus der älteren, nicht vorveröffentlichten Patentanmeldung geht ein Laser-Transferdruck-Verfahren hervor, bei dem die Mikrokapseln mit den verschiedenen Farbstoffen sich als Schicht auf einem Farbband befinden, ähnlich einem aus der US-A-3 570 380 bekanntem Farbband mit Mikrokapseln mit einheitlichem Druckfarbstoff für Schwarz-Weiß-Druck.

Für die einschlägigen bekannten Einrichtungen und Verfahren besteht für Mehrfarbendruck das Problem der exakten Deckung der Farbbilder der verschiedenen Grundfarben, nämlich zur Erzielung eines scharfen Bildes und/oder korrekter mischfarbiger Druckpunkte. Ein Problem ist dabei die gegenseitige Justierung mehrerer Laserstrahl-Quellen.

Bei der ansonsten vorteilhaften Anwendung statischer Verteilung der Mikrokapseln verschiedener Farben ist es nicht möglich, die verschiedenen Farben bzw. die Lage ihrer Kapseln zu identifizieren. In diesem Falle werden drei verschiedene Laserwellenlängen verwendet, für die selektiv zu den verschiedenen Wellenlängen passende Absorberstoffe in den Kapseln vorhanden sein müssen.

Es ist Aufgabe der vorliegenden Erfindung, ein Prinzip anzugeben, mit dem Laserstrahl-induziertes Farbdrucken durchzuführen ist, ohne daß Laser verschiedener Wellenlängen mit zugehörigen Absorbermaterialien erforderlich (und entsprechend zu justieren) sind.

Diese Aufgabe gemäß einer ersten Variante wird mit den Maßnahmen des Patentanspruches 1 und gemäß einer zweiten Variante mit den Merkmalen des Anspruches 2 gelöst.

Der vorliegenden Erfindung liegt der Gedanke zugrunde, ein solches physikalisches Prinzip zu finden und anzuwenden, bei dem es möglich ist, zu erkennen, welcher Farbstoff in einer solchen Mikrokapsel enthalten ist, die allein momentan vom Laserstrahl der einen einzigen verwendeten Laserstrahlquelle "angesteuert" wird. Für die Erfindung ist vorgesehen, die Schicht der Mikrokapseln mit einem gut fokussierten Laserstrahl zeilenweise, rastermäßig und dgl. abzutasten. Stellt man fest, daß an einem momentan vom fokussierten Laserstrahl getroffenen Ort, dem ein bestimmter Druckpunkt der Druckvorlage zugeordnet ist, eine Mikrokapsel der vargegebenen Farbe vorhanden ist, erfolgt von dieser einen Mikrokapsel eine Rückmeldung an ein Detektorsystem, dessen Detektorsignal dazu benutzt wird, jetzt in diesem Augenblick den Laserstrahl auf so hohe Energie zu tasten, daß ein Zerplatzen dieser einen Mikrokapsel erfolgt. Für eine Mischfarbe läßt man diesen Prozeß entsprechend etwas zeitverschoben für die eine und für die andere der beteiligten Grundfarben ablaufen, nämlich nach Detektion und Zerplatzenlassen der einen Mikrokapsel erfolgt nach Detektion der nächstfolgenden Kapsel der anderen Farbe das Zerplatzenlassen dieser Kapsel.

Mit anderen Worten beschrieben handelt es sich bei der Erfindung darum, mit einem Laserstrahl die Druckfläche zu überstreichen, und zwar mit einem Laserstrahl mit einer solchen Energie, die noch unzureichend ist, eine der Mikrokapseln zum Zerplatzen zu bringen. Soll nun an einer bestimmten Stelle z.B. ein Druckpunkt mit der Farbe des Cyan gedruckt werden, wird durch eben diesen Laserstrahl in der Schicht der Mikrokapseln "nachgefragt", welche am Ort dieses Druckpunktes vorhandene Mikrokapsel den Farbstoff Cyan enthält. Soll die Mischfarbe Cyan/Magenta gedruckt werden, wird nach einer Druckkapsel mit Cyan und nach einer Druckkapsel mit Magenta nachgefragt. Wie für Druckverfahren mit Mikrokapseln üblich, ist die Größe der Mikrokapseln so klein und deren Verteilung so fein, daß an jedem vorgegebenen Druckpunkt in für die Druckgenauigkeit ausreichender Nähe solche Mikrokapseln der einzelnen Farben zur Verfügung stehen, die dann bei Erkennen in welcher der richtige Farbstoff vorliegt, durch den Laserstrahl zum Zerplatzen gebracht werden.

Das Problem des Erkennens, welche der Mikrokapseln den im Augenblick benötigten Druckfarbstoff enthält, ist gemäß der ersten Variante erfindungsgemäß so gelöst, daß die Mikrokapseln Fluoreszenztransformer enthalten. Bei einem solchen Fluoreszenztransformer handelt es sich um einen Stoff bzw, um ein Mittel, das z.B. durch Stokes-oder Antistokes-Prozesse Licht, nämlich des auftreffenden Laserstrahls, in zurückgestrahlte bzw. -gestreute (Fluoreszenz-)Strahlung umwandelt, die eine andere Wellenlänge bzw. Frequenz hat. Erfindungsgemäß ist vorgesehen, daß in den Kapseln der einen Druckfarbe (z.B. Cyan) ein Fluoreszenztransformer enthalten ist, der Umwandlung in eine erste Frequenz bewirkt. In Mikrokapseln eines anderen Farbstoffes (z.B. Magenta) ist Fluoreszenztransformer enthalten, der Umwandlung in eine andere, zweite Frequenz bewirkt. Entsprechendes ist vorgesehen für den dritten Farbstoff und für einen ggf. vorgesehenen vierten Farbstoff (Schwarz). Das Material der Wandung der Mikrokapseln ist derart gewählt, daß diese Fluoreszenzprozesse ablaufen und die erzeugte Fluoreszenzstrahlung aus der Kapsel austreten kann.

Der Laserstrahl ist so fein fokussiert, daß er in einem bestimmten Augenblick im wesentlichen nur eine einzige Mikrokapsel trifft. Dabei liegt (zunächst) eine Laserstrahl-Intensität bzw. -Energie vor, die eine solche Mikrokapsel noch nicht zum Zerplatzen bringt. Diese Mikrokapsel signalisiert über den Fluoreszenztransformer, welcher Farbstoff (z.B. Cyan) in ihr enthalten ist. Der Fluoreszenztransformer liefert das Fluoreszenzsignal mit der ersten Frequenz bzw. Wellenlänge, die von einem entsprechend selektiven, zusätzlich vargesehenen Detektor empfangen und in ein Ausgangssignal umgesetzt wird. Weitere vorhandene entsprechende Detektoren liefern in diesem Augenblick kein Ausgangssignal. Diese liefern erst dann ein Ausgangssignal, wenn mit dem Laserstrahl eine Mikrokapsel der ihnen zugeordneten Druckfarbe (Magenta, Yellow ...) momentan angesteuert wird und die entsprechende Fluoreszenzstrahlung auftritt.

Soll nun an einem vorgegebenen Ort, auf den momentan der Laserstrahl mit noch geringer Laserstrahlenergie auftrifft, ein Druckpunkt, z.B. der Farbe Cyan, gedruckt werden, so wird in dem Augenblick, in dem der Laserstrahl tatsächlich eine Mikrokapsel "Cyan" trifft, d.h. gleichzeitig das zugehörige Fluoreszenzsignal der ersten Frequenz (Cyan) vom zugehörigen Detektor detektiert und in ein Ausgangssignal umgesetzt wird, auf das Auftreten dieses Ausgangssignals hin der Laserstrahl auf hohe Energie getastet. Es wird damit diese Mikrokapsel "Cyan" zum Zerplatzen gebracht und der Druckpunkt "Cyan" auf dem Papier erzeugt. Entsprechendes gilt für Druckpunkte der anderen Farbstoffe und sinngemäß auch für mischfarbige Druckpunkte. Soll z.B. ein Druckpunkt der Mischfarbe Cyan/Magenta gedruckt werden, wird jeweils genau dann der Laserstrahl pulsweise auf hohe Energie getastet, wenn der eine Detektor für Fluoreszenzstrahlung der Mikrokapseln der einen Komponente der Mischfarbe sein Ausgangssignal liefert, nämlich entsprechend dem Auftreffen auf eine Mikrokapsel dieser Farbe und es wird der Laserstrahl dann wieder auf hohe Energie getastet, sobald (d.h. praktisch unmittelbar folgend) der selektive Detektor der anderen Komponente der Mischfarbe durch sein Ausgangssignal signalisiert, daß der (jetzt noch schwache Laserstrahl) gerade auf eine Mikrokapsel dieser anderen Druckfarbe auftrifft.

Alternativ kann statt eines jeweiligen fertigen Druckfarbstoffes in einer Mikrokapsel vorgesehen sein, daß eine an sich bekannte Kombination aus Farbstoffkuppler und Farbstoff-Precursor verwendet wird. Zum Beispiel kann der Farbstoffkuppler in der jeweiligen Mikrokapsel und der Precursor in derjenigen Schicht vorhanden sein, in die die Kapseln eingebettet sind. Wie dies an sich bekannt ist, entsteht der Farbstoff bei Freisetzen des Kupplers, d.h. nach dem Zerplatzen der jeweiligen Mikrokapsel.

Die vorliegende Erfindung kann angewendet werden auf Laser-Transferdruck, bei dem ein Farbband verwendet wird, das in einer Schicht die besprochenen Mikrokapseln enthält. Die Erfindung läßt sich aber auch bei einem solchen Verfahren anwenden, bei dem die Mikrokapseln in der Art eines Toners verwendet wird, wie dies für Toner im Zusammenhang mit elektrostatischem Kopieren hinlänglich bekannt ist. Für diese alternative Ausführungsform wird der aus den für die Erfindung vorgesehenen Mikrokapseln, die den jeweiligen Fluoreszenztransformer enthalten, zunächst auf das Druckpapier als eine Schicht aufgebracht und dann wird mit dem fokussierten Laserstrahl die betreffende Fläche entsprechend den obigen Ausführungen punktweise abgetastet. Soll eine bestimmte Farbe gedruckt werden und liegt für den momentanen Ort des Auftreffens des Laserstrahls die Rückmeldung vor "hier ist eine Mikrokapsel des betreffenden Farbstoffes vorhanden" erfolgt das Drucken durch pulsweises Tasten des Laserstrahls auf hohe Energie. Zum Drucken nicht verwendete Mikrokapseln werden nachträglich wieder entfernt und können erneut verwendet werden.

Bei der Erfindung kann vorgesehen sein, die Druckfläche lückenlos abzutasten. Computer-gesteuert kann auch vorgesehen sein, nur solche Stellen mit dem Laserstrahl anzusteuern, an denen tatsächlich ein Druckvorgang durchzuführen ist. Mit dieser Maßnahme läßt sich der Druckvorgang mit entsprechender Einsparung an Zeit durchführen.

Weitere Erläuterungen gehen aus der nachfolgenden anhand der Figuren gegebenen Beschreibung zu einem Ausführungsbeispiel hervor.

Mit 2 ist ein mit einer Schicht 3 aus Mikrokapseln beschichtetes Transferband bezeichnet. Dargestellt sind Mikrokapseln des Farbstoffes Cyan (C) des Farbstoffes Magenta (M) und des Farbstoffes Yellow (Y). Mit 4 ist ein Blatt Papier bezeichnet.

Mit 10 ist eine Laserdiode bezeichnet, die als Laserstrahlungs-Quelle dient. Der mit Hilfe einer Optik 11 fokussierte Laserstrahl ist mit 12 bezeichnet. Er trifft in der Figur momentan auf eine Mikrokapsel des Farbstoffes Cyan (C) auf.

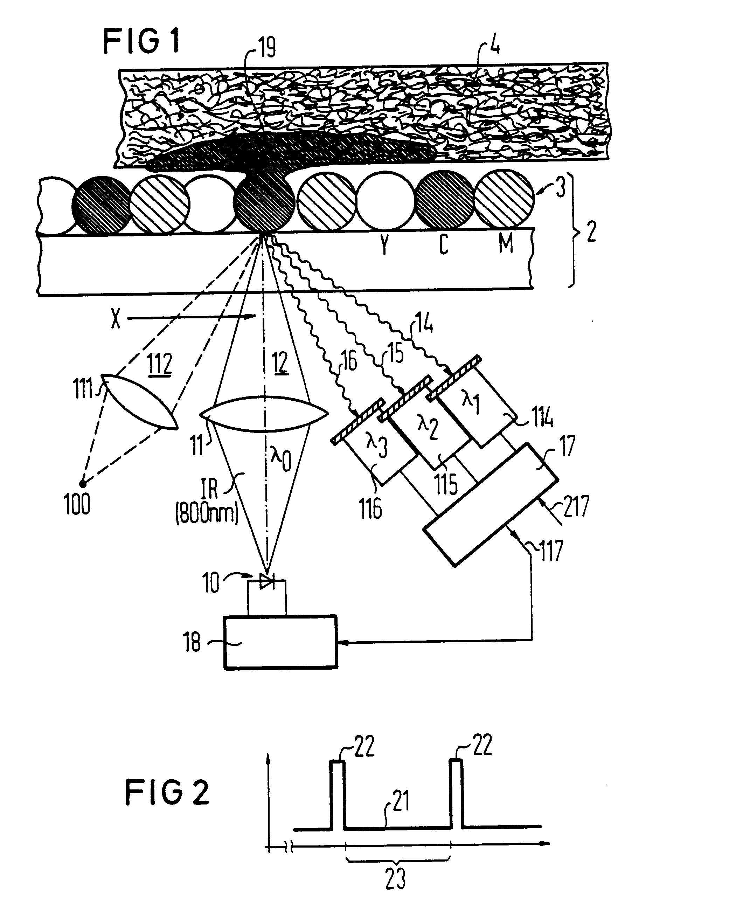

Wie oben beschrieben hat der Laserstrahl 12 beim bloßen Abtasten der Schicht der Mikrokapseln 3 (zunächst) nur so geringe Energie, daß ausreichende Fluoreszenzstrahlung von dem in der betreffenden Mikrokapsel 3 enthaltenen Fluoreszenztransformer erzeugt werden kann. Mit 14 ist Fluoreszenzstrahlung derjenigen Wellenlänge bzw. Frequenz bezeichnet, die dem Fluoreszenztransformer entspricht, der in einer jeden Mikrokapsel 3 des Farbstoffes Cyan (C) enthalten ist. Lediglich gestrichelt sind weitere Fluoreszenzstrahlungen 15 und 16 angedeutet, die Fluoreszenztransformern entsprechen, die den Mikrokapseln 3 des Farbstoffes Magenta (M) bzw. den Mikrokapseln 3 des Farbstoffes Yellow (Y) entsprecher. Fluoreszenzstrahlungen 15 und 16 können bei Auftreffen des Laserstrahls 12 auf lediglich eine Mikrokapsel des Farbstoffes Cyan nicht auftreten. Dementsprechend liefert auch nur der Detektor 114 ein Ausgangssignal an die Logik-Schaltung 17, die ihrerseits ein Steuersignal an die Treiberstufe 18 gibt. In der Logik-Schaltung 17 wird entschieden, ob auf das Auftreten einer Fluoreszenzstrahlung 14 hin ein Druckvorgang ausgelöst werden soll, nämlich ein Druckpunkt der Farbe Cyan erzeugt werden soll. Die Darstellung der Figur sieht vor, daß dies der Fall ist. Das der Treiberstufe 18 zugeführte Signal bewirkt, daß von der Treiberstufe die Laserdiode 10 auf hoher Leistung getastet wird. Ein Laserstrahl 12 mit nunmehr dieser hohen Leistung bewirkt das Zerplatzen der Mikrokapsel 3 und erzeugt den in der Fig. 1 dargestellten Farb-Druckpunkt 19 auf bzw. in dem Papier 4.

Fig. 2 zeigt in einem Diagramm (Ordinate : Laserintensität; Abzisse = Zeit) den Ablauf, und zwar aufgetragen die momentane Laserintensität über der Zeit. Die Laserintensität 21 entspricht der Zeitphase des Nachfragens. Die Laserintensität 22 ist die Arbeitsintensität, die für das Erzeugen eines (wie in der Figur 1 dargestellten) Druckvorganges erforderlich ist.

Wäre im Bereich des Druckpunktes 19 statt der Farbe Cyan die Farbe Magenta zu drucken gewesen, hätte die Logik 17 aufgrund des Druckbefehls 217 den Druckvorgang (erst) dann ausgelöst, wenn entsprechend der Verschiebung x des abtastenden, fokussierten Laserstrahls 12 auf die (benachbarte) Mikrokapsel 3 des Farbstoffes Magenta (M) auftrifft. Der Zeitpunkt, zu dem dies eingetreten ist, wird durch den Empfang der Fluoreszenzstrahlung 15 des den Farbstoff "Magenta" zugeordneten Fluoreszenztransformers signalisiert, der in einer Mikrokapsel "Magenta" enthalten ist.

Die zweite Lösungsvariante gemäß Patentanspruch 2 besteht im Prinzip darin, durch Verwendung eines zusätzliches Lichtstrahls weißen Lichtes das Erfordernis der Fluoreszenztransformer aufzuheben. Bei Bestrahlung der mit Druckfarbstoff jeweiliger Farbe gefüllten Mikrokapseln mit weißem Licht reflektieren diese eine Strahlung derjenigen Farbe, die der Farbe des Druckfarbstoffs der jeweiligen einzelnen Mikrokapsel entspricht. Mit dem weißen Licht läßt sich also die Druckfarbe der einzelnen Mikrokapseln abfragen.

Bei Verwendung der Druckfarben Cyan, Magenta und Yellow, nämlich von Farben, die selbst keine der Grundfarben Rot, Grün, Blau sind, sondern entsprechende Mischfarben sind, sind die Detektoren 114, 115, 116 hinsichtlich ihrer Frequenzselektivität entpsrechend auszuwählen. Für den Fachmann ist dies aber kein Problem.

Die Figur 1 zeigt mit dem gestrichelt dargestellten Zusatz einer Quelle 100 für einen fokussierten, weißen Lichtstrahl 112 ein Ausführungsbeispiel auch für diese zweite Variante. Der weiße Lichtstrahl wird synchron und hinsichtlich des Auftreffens auf die Schicht der Mikrokapseln 3 übereinstimmend mit der Ablenkung des Laserstrahls 12 abgelenkt. Die übrigen Vorgänge der beiden Varianten 1 und 2 sind gleich oder zumindest analog.

Es kann deckungsgleiches Ablenken von Lichtstrahl 112 und Laserstrahl 12 hinsichtlich des Auftreffens auf eine jeweilige Mikrokapsel 3 vorgesehen sein. Stattdessen kann die Ablenkung auch so vorgenommen werden, daß stets ein vorgegebener Abstand der aufeinanderfolgenden Strahlen 112 und 12 vorliegt. Der diesen örtlichen Abstand entsprechende zeitliche Abstand des Auftreffens des Laserstrahls 12 gegenüber dem Auftreffen des weißen Strahls 112 muß dann hinsichtlich der "Koinzidenz" berücksichtigt werden, nämlich damit das pulsmäßige Erhöhen der Laserenergie des Laserstrahls 12 exakt zu demjenigen Zeitpunkt erfolgt, zu dem dieser Laserstrahl diejenige bestimmte Mikrokapsel 3 (mit der betreffenden Druckfarbe) trifft, die zuvor mit Hilfe des weißen Lichtstrahls als Mikrokapsel dieser Druckfarbe (an dem Ort, an dem der Druck erfolgen soll) identifiziert worden ist.

Hinsichtlich der Detektoren ist noch auf folgendes hinzuweisen: Die Farbwirkung der Druckfarben Cyan, Magenta und Yellow beruht auf frequenzabhängigem Reflexionsvermögen. Cyan reflektiert Blau und Grün und absorbiert Rot. Dies ergibt die Farbe Blau-Grün des Cyan. Der Detektor für Kapseln des Farbstoffes Cyan muß einer ersten Alternative entsprechend auf diese beiden Farben Blau und Grün ansprechen. Die sinngemäße Bedingung gilt für die Detektoren der anderen Farbstoffe Magenta und Yellow. Eine andere zweite Alternative ist, drei solche Detektoren zu verwenden, von denen der eine für Blau, der andere für Grün und der dritte für Rot empfindlich ist. Zur Detektion der Farbe des Cyan wird dann eine logische Verknüpfung dieser Detektoren durchgeführt. Die Detektoren für Blau und Grün sprechen auf Cyan an, wohingegen der Detektor für Rat für Cyan kein Signal abgibt. Entsprechendes gilt für die anderen Farbstoffe.

**Patentansprüche**

1. Laserstrahl-induziertes Farbdrucken unter Verwendung von Farbstoff bzw. Farbstoffbildner enthaltenden Mikrokapseln, die durch Laserstrahlenergie eines fokussierten Laserstrahls vorgebbar zum Zerplatzen zu bringen sind und so auf einer Druckunterlage einen entsprechend farbigen Druckpunkt bewirken,
   **gekennzeichnet dadurch,**
   daß eine Laserstrahlungs-Quelle (10) nur einer Wellenlänge für diesen fokussierten Laserstrahl (12) erforderlich ist,
   daß die Mikrokapseln (3) einer jeweiligen Farbe (C, M,Y...) zusätzlich ein Mittel mit Fluoreszenztransformer-Eigenschaft enthalten, das so ausgewählt ist, daß es Strahlung der Frequenz der Laserstrahlungs-Quelle (10) in Strahlung mit von dieser Frequenz verschiedener Fluoreszenzfrequenz umsetzt, daß für jede Farbe (C, M, Y...) ein solches Mittel mit dieser Fluoreszenztransformer-Eigenschaft vorgesehen ist, dessen Fluoreszenzfrequenz sich von denjenigen Mitteln unterscheidet, die den anderen Druckfarben zugeordnet sind,
   daß die zugehörige Druckeinrichtung eine der Anzahl der Druckfarben (C, M, Y ...) entsprechende Anzahl von frequenzselektiven Strahlungsdetektoren (114, 115, 116) hat, die auf je eine der Fluoreszenzfrequenzen abgestimmt sind,
   daß bei Empfang einer solchen Fluoreszenzstrahlung durch einen der Strahlungsdetektoren (114, 115, 116) dieser Detektor (114) ein Ausgangssignal (117) abgibt, das die Druckfarbe (C) der augenblicklich vom Laserstrahl (12) angesteuerten Mikrokapsel (3) angibt,
   daß eine Logikschaltung (17) vorgesehen ist, die abhängig vom augenblicklichen Auftreffort des fokussierten Laserstrahls (12) bei Koinzidenz eines an die Logikschaltung (17) gegebenen Druckbefehls (217) für eine bestimmte Druckfarbe (C) und eines Signals des Detektors (114) dieser bestimmten Druckfarbe (C) der momentan vom Laserstrahl (12) erfaßten Druckkapsel (3) ein Ausgangssignal (117) liefert und
   daß mit diesem Ausgangssignal eine pulsmäßige Erhöhung der Laserstrahlenergie bzw. -intensität bewirkt (18) wird, so daß ein Zerplatzen der Mikrokapsel (3) der betreffenden Druckfarbe (C) erfolgt.

2. Laserstrahl-induziertes Farbdrucken unter Verwendung von Farbstoff bzw. Farbstoffbildner enthaltenden Mikrokapseln, die durch Laserstrahlenergie eines fokussierten Laserstrahls vorgebbar zum Zerplatzen zu bringen sind, und so auf einer Druckunterlage einen entsprechend farbigen Druckpunkt bewirken,
   **gekennzeichnet dadurch,**
   daß eine Laserstrahlungs-Quelle (10) nur einer Wellenlänge für diesen fokussierten Laserstrahl (12) erforderlich ist, daß eine Quelle (100) für einen fokussierten Lichtstrahl (112) mit weißem Licht vorgesehen ist, mit dem eine jeweilige Reflexion von Licht der Druckfarbe der im Augenblick von diesem weißen Lichtstrahl (112) getroffenen Mikrokapsel (3) erfolgt, daß der weiße Lichtstrahl (112) derart zusammen mit dem fokussierten Laserstrahl (12) abgelenkt wird, so daß beide Strahlen (12, 112) fokussiert im wesentlichen auf jeweils dieselbe Mikrokapsel (3) auftreffen,
   daß die zugehörige Druckeinrichtung eine der Anzahl der Druckfarben (C, M, Y ...) entsprechende Anzahl von frequenzselektiven Strahlungsdetektoren (114, 115, 116) hat, die zur Unterscheidung der Druckfarben abgestimmt sind,
   daß bei Empfang einer solchen Reflexion durch einen der Strahlungsdetektoren (114, 115, 116) dieser Detektor (114) ein Ausgangssignal (117) abgibt, das die Druckfarbe (C) der augenblicklich angesteuerten Mikrokapseln (3) angibt,
   daß eine Logikschaltung (17) vorgesehen ist, die abhängig vom augenblicklichen Auftreffort der fokussierten Strahlen (112, 12) bei Koinzidenz eines an die Logikschaltung gegebenen Druckbefehls (217) für eine bestimmte Druckfarbe (C) und eines Signals des Detektors (114) dieser bestimmten Druckfarbe (C) der momentan erfaßten Druckkapsel (3) ein Ausgangssignal (117) liefert, und daß mit diesem Ausgangssignal eine pulsmäßige Erhöhung der Laserstrahlenergie bzw. Intensität bewirkt (18) wird, so daß ein Zerplatzen

9 EP 0 380 510 B1 10

der Mikrokapsel (3) der betreffenden Druckfarbe (C) erfolgt.

3. Farbdrucken nach Anspruch 1,
**gekennzeichnet dadurch**,
daß für den Druck einer Mischfarbe (C/M,...) benachbarte Mikrokapseln (3) der Komponenten (C, M) der Mischfarbe (C/M) aufeinanderfolgend zum Zerplatzen gebracht werden, bei Koinzidenz einerseits des Auftretens von Fluoreszenzstrahlung (14), die die eine Druckfarbe (C) anzeigt und andererseits des Druckbefehls (217) für diese Mischfarbe (C/M) bzw. für die enthaltenen Komponenten (C und M) der Mischfarbe der Druck dieser Farbkomponente (C) erfolgt nun bei nächstfolgend eintretender Koinzidenz von Fluoreszenzstrahlung (15) der anderen Farbkomponente (M) und diesem Druckbefehl (217) für die Mischfarbe (C/M) der Druck der anderen Farbkomponente erfolgt.

4. Farbdrucken nach Anspruch 2,
**gekennzeichnet dadurch,**
daß weißer Lichtstrahl (112) und Laserstrahl (12) in vorgegebenem Abstand voneinander die Mikrokapseln (3) der Schicht treffen und dieser Abstand hinsichtlich der Koinzidenz berücksichtigt ist.


## Claims

1. Laser-beam-induced colour printing with the use of micro-capsules containing dye or dye formers, which micro-capsules, by means of the laser-beam energy of a focused laser beam, can be caused to burst in a predeterminable manner and in this way effect an appropriately coloured printing point on a printing base,
characterized in that a laser-radiation source (10) of only one wavelength is required for this focused laser beam (12),
in that the micro-capsules (3) of a respective colour (C, M,Y...) additionally contain a medium with a fluorescence-transformer property, which is selected in such a way that it converts radiation of the frequency of the laser-radiation source (10) into radiation with fluorescence frequency which differs from this frequency,
in that for each colour (C, M, Y...) such a medium with this fluorescence-transformer property is provided, the fluorescence frequency of which differs from those media which are associated with the other printing colours,
in that the associated printing device has a number of frequency-selective radiation detectors (114, 115, 116) corresponding to the number of printing colours (C, M, Y,...), which radiation detectors are tuned to one of the fluorescence frequencies in each case,
in that, upon the receiving of such a fluorescence radiation by one of the radiation detectors (114, 115, 116), this detector (114) emits an output signal (117) which indicates the printing colour (C) of the microcapsule (3) which is presently being controlled by the laser beam (12),
in that a logic circuit (17) is provided, which, dependent upon the present point of incidence of the focused laser beam (12) with coincidence of a printing command (217) given to the logic circuit (17) for a particular printing colour (C) and of a signal of the detector (114) of this particular printing colour (C) of the printing capsule (3) presently being determined by the laser beam (12), supplies an output signal (117) and
in that with this output signal an increase of the laser-beam energy or intensity in terms of pulses is effected (18), so that a bursting of the microcapsule (3) of the relevant printing colour (C) takes place.

2. Laser-beam-induced colour printing with the use of micro-capsules containing dye or dye formers, which micro-capsules, by means of the laser-beam energy of a focused laser beam, can be caused to burst in a predeterminable manner, and in this way effect an appropriately coloured printing point on a printing base,
characterized in that a laser-radiation source (10) of only one wavelength is required for this focused laser beam (12),
in that a source (100) for a focused light beam (112) with white light is provided, with which a respective reflection of light of the printing colour of the micro-capsule (3), hit at this moment by this white light beam (112), takes place,
in that the white light beam (112) is deflected together with the focused laser beam (12) in such a way that both beams (12, 112) in focus substantially hit the same micro-capsule (3) in each case,
in that the associated printing device has a number of frequency-selective radiation detectors (114, 115, 116) corresponding to the number of printing colours (C, M, Y ...), which radiation detectors are tuned to differentiate the printing colours,
in that, upon the receiving of such a reflection by one of the radiation detectors (114, 115, 116), this detector (114) emits an output signal (117), which indicates the printing colour (C) of the micro-capsules (3) presently being controlled,
in that a logic circuit (17) is provided, which, dependent upon the present point of incidence of the focused beams (112, 12) with coincidence of a printing command (217) given to the logic circuit for a particular printing colour (C) and of a signal

6

of the detector (114) of this particular printing colour (C) of the printing capsule (3) presently being determined, supplies an output signal (117), and in that with this output signal an increase of the laser-beam energy or intensity in terms of pulses is effected (18), so that a bursting of the micro-capsule (3) of the relevant printing colour (C) takes place.

3. Colour printing according to claim 1, characterized in that for the printing of a mixed colour (C/M,...) adjacent micro-capsules (3) of the components (C, M) of the mixed colour (C/M) are successively caused to burst, with coincidence of the occurrence of fluorescence radiation (14) which indicates the one printing colour (C), on the one hand, and, on the other hand, of the printing command (217) for this mixed colour (C/M) or for the contained components (C and M) of the mixed colour the printing of this colour component (C) now takes place and with coincidence, occurring subsequently, of fluorescence radiation (15) of the other colour components (M) and this printing command (217) for the mixed colour (C/M) the printing of the other colour component takes place.

4. Colour printing according to claim 2, characterized in that white light beam (112) and laser beam (12) hit the micro-capsules (3) of the layer at a specified distance from one another and this distance is considered with regard to the coincidence.

**Revendications**

1. Impression en couleurs, déclenchée par un faisceau laser, moyennant l'utilisation de microcapsules contenant un colorant ou un agent de formation d'un colorant, qui doivent être amenées à éclater, d'une manière pouvant être prédéterminée, par l'énergie d'un faisceau laser focalisé et appliquent ainsi, sur un support d'impression, un point imprimé possédant une couleur correspondante, caractérisée par le fait qu'une source (10) du faisceau laser possédant seulement une longueur d'onde est nécessaire pour ce faisceau laser focalisé (12), que les microcapsules (3) d'une couleur respective (C,M,Y...) contiennent en supplément un milieu possédant une caractéristique de transformation en fluorescence, qui est choisie de manière à convertir le rayonnement possédant la fréquence de la source de rayonnement laser (10) en un rayonnement possédant une fréquence de fluorescence différente de cette fréquence, que pour chaque couleur (C,M,Y...), il est prévu un tel milieu possédant cette caractéristique de transformation en fluorescence, dont la fréquence de fluorescence diffère des moyens qui sont associés aux autres couleurs d'impression, que le dispositif d'impression associé possède un nombre, qui dépend du nombre des couleurs d'impression (C,M,Y,...), de détecteurs de rayonnement (114,115,116), qui sont sélectifs du point de vue des fréquences et sont réglés chacun sur l'une des fréquences de fluorescence, que lors de la réception d'un tel rayonnement de fluorescence par l'un des détecteurs de rayonnement (114,115,116), ce détecteur (114) délivre un signal de sortie (117), qui indique la couleur d'impression (C) de la microcapsule (3) commandée à cet instant par le faisceau laser (12), qu'il est prévu un circuit logique (17), qui, en fonction du point instantané d'impact du faisceau laser focalisé (12), délivre un signal de sortie (117), en cas de coïncidence entre un ordre d'impression (217) appliqué au circuit logique (17), pour une couleur d'impression déterminée (C), et un signal du détecteur (114) de cette couleur d'impression (C) déterminée de la capsule d'impression (3) atteinte à cet instant par le faisceau laser (12), et qu'un accroissement impulsionnel de l'énergie ou de l'intensité du faisceau laser est déclenché (18) par ce signal de sortie de sorte qu'il se produit un éclatement de la microcapsule (3) de la couleur d'impression (C) considérée.

2. Impression en couleurs, déclenchée par un faisceau laser, moyennant l'utilisation de microcapsules contenant un colorant ou un agent de formation d'un colorant, qui doivent être amenés à exploser, d'une manière pouvant être prédéterminée, par l'énergie d'un faisceau laser focalisé et applique ainsi, sur un support d'impression, un point imprimé possédant une couleur correspondante, caractérisée par le fait qu'une source de rayonnement laser (10) possédant une seule longueur d'onde est nécessaire pour ce faisceau laser focalisé (12), qu'il est prévu une source (100) pour un faisceau de lumière focalisé (112) possédant une lumière blanche et avec lequel est réalisée une réflexion respective de la lumière de la couleur d'impression de la microcapsule (3) atteinte à cet instant par ce faisceau de lumière blanche (112), que le faisceau de lumière blanche (112) est dévié conjointement avec le faisceau laser focalisé (12) de telle sorte que ces deux faisceaux (12,112) rencontrent, d'une manière focalisée, sensiblement la même microcapsule (3) respective, que le dispositif d'impression associé possède un nombre, qui dépend du nombre des couleurs d'impression (C,M,Y,...), de détecteurs de rayonnement (114,115,116), qui sont sélectifs du point de vue des fréquences et sont réglés pour différencier les couleurs d'impression,

que lors de la réception d'une telle réflexion par l'un des détecteurs de rayonnement (114,115,117), ce détecteur (114) délivre un signal de sortie (117), qui indique la couleur d'impression (C) des microcapsules (3) commandées à cet instant,

qu'il est prévu un circuit logique (17), qui, en fonction du point d'impact instantané des rayons focalisés (112,12), délivre un signal de sortie (117), en cas de coïncidence entre un ordre d'impression (217) envoyé au circuit logique, pour une couleur d'impression déterminée (C), et un signal du détecteur (114), de cette couleur d'impression déterminée (C) de la capsule d'impression (3) atteinte à cet intant, et

que ce signal de sortie déclenche un accroissement impulsionnel de l'énergie ou de l'intensité du faisceau laser de sorte qu'il se produit un éclatement de la microcapsule (3) de la couleur d'impression considérée (C).

3. Impression en couleurs suivant la revendication 1, caractérisée par le fait que pour l'impression d'une couleur mixte (C,M,...), on amène successivement à exploser des microcapsules voisines (3) des composantes (C,M) de la couleur mixte (C,M), que, dans le cas d'une coïncidence entre d'une part l'apparition du rayonnement de fluorescence (14), qui indique une couleur d'impression (C) et d'autre part de l'ordre d'impression (217) pour cette couleur mixte (C,M) ou pour les composantes contenues (C,M) de la couleur mixte, l'impression de cette composante de couleur (C) est exécutée, et que lors de l'apparition immédiatement suivante d'une coïncidence entre le rayonnement à fluorescence (15) de l'autre composante de couleur (M) et cet ordre d'impression (217) pour la couleur mixte (C,M), l'impression de l'autre composante de couleur est exécutée.

4. Impression en couleurs suivant la revendication 2, caractérisée par le fait qu'un faisceau de lumière blanche (112) et un faisceau laser (12) atteignent, à une distance prédéterminée l'un de l'autre, les microcapsules (3) de la couche et que cette distance est prise en compte en ce qui concerne la coïncidence.

FIG 1

19    4

112    12

111    11    114

100    116    115    17    217

10    117

18

FIG 2

22    22

21

23